# EUROPÄISCHE PATENTANMELDUNG

(11) **EP 0 856 707 A2**
(43) Veröffentlichungstag der Anmeldung: **05.08.1998**
(21) Anmeldenummer: 98101117.4
(22) Anmeldetag: 23.01.1998
(51) Int. Cl.: F24F 3/14

(54) **Verfahren und Vorrichtung zur Entfeuchtung von Luft**

(30) Priorität: 01.02.1997 DE 19703793; 01.02.1997 DE 19703794
(71) Anmelder: adsotherm GmbH, Separationstechnik, 57368 Lennestadt (DE)
(72) Erfinder: Schmelzer, Robert, 57361 Lennestadt (DE)
(74) Vertreter: Valentin, Ekkehard, Dipl.-Ing.

(57) **Zusammenfassung**

Die Erfindung betrifft ein Verfahren zur Entfeuchtung von gasförmigen Medien, insbesondere zur Klimatisierung von Räumen, durch Adsorption von Feuchtigkeit aus der Luft (1) an ein mit der Raumluft (1) durchströmbares Adsorptionsmedium (3) unter Abführung frei werdender Wärme, sowie durch Regeneration wassergesättigten Adsorptionsmediums (4) in einem Strom angewärmter Luft (2), wobei die Adsorptionsmedien (3, 4) jeweils in luft- oder gasdurchströmbaren Boxen (5, 6) enthalten sind. Das Verfahren wird dadurch verbessert, daß nach Maßgabe des erreichten Sättigungsgrades im von Luft (1) durchströmten Adsorptionsmedium (3) die dieses Medium enthaltende Box (5) aus dem Strom der feuchten Luft (1) in den Strom der regenerativen Warmluft (2) verlagert und die regeneriertes, für Feuchtigkeit aufnahmefähiges Adsorptionsmedium (4) enthaltende Box (6) in den Strom der feuchten Luft (1) verlagert wird, und umgekehrt. Die Erfindung betrifft auch eine Vorrichtung zur Durchführung des Verfahrens.

## Beschreibung

Die Erfindung betrifft ein Verfahren zur Entfeuchtung von gasförmigen Medien, insbesondere zur Klimatisierung von Räumen, durch Adsorption von Feuchtigkeit aus der Luft an ein mit der Luft durchströmbares Adsorptionsmedium unter Abführung frei werdender Wärme, sowie durch Regeneration wassergesättigten Adsorptionsmediums in einem Strom angewärmter Luft, wobei die Adsorptionsmedien jeweils in luft- oder gasdurchströmbaren Boxen enthalten sind.

Weiterhin betrifft die Erfindung eine Vorrichtung zur Durchführung des Verfahrens.

Bei der Klimatisierung von Räumen, im wesentlichen bei der Entfeuchtung und Kühlung der Raumluft, werden in erster Linie Kältemaschinen eingesetzt, mit denen Außenluft unter den Taupunkt gekühlt wird. Das Verfahren erfordert einen hohen Energieaufwand und birgt die Problematik der Verwendung von Kältemitteln insbesondere auf FKW-Basis oder deren Ersatzstoffe.

Als alternatives Verfahren ist die sorptionsgestützte Klimatisierung bekannt, wobei die Trennung von Entfeuchtung und Kühlung ein spezielles Kennzeichen ist. Im Gegensatz zur Kompressionskältemaschine, die ausschließlich elektrischen Strom benötigt, kann bei der sorptionsgestützten Klimatisierung als Antriebsenergie sowohl elektrischer Strom als auch Wärme mit niedrigem Niveau eingesetzt werden. Ferner ist bekannt, daß die Entfeuchtung der Luft mit Entfeuchtungsvorrichtungen, wie Adsorbern durchgeführt wird, entweder mit Feststoffabsorbern oder mit einem rotierenden Sorptionsgenerator, einer bekannten rotierenden Regenerationsvorrichtung zur Wärmerückgewinnung mit beschichteter Sorptionssubstanz.

Das Dokument JP 61-252497 A beschreibt ein Sorptionsrotorgerät mit in einem rotierenden Wabensystem von Austauschflächen aufgebrachter Sorptionssubstanz, welche in einem Bereich der rotierenden Vorrichtung permanent mit Feuchtigkeit aus der Raumluft beladen wird und in einem anderen Bereich durch entgegengesetzt strömende Regenerationsluft von adsorbiertem Wasser regeneriert wird.

Wegen der geringen sorptiven Gesamtkapazität von Sorptionssubstanz und der permanenten Betriebsweise, die eine längere Verweildauer der Sorptionssubstanz im zu entfeuchtenden Luftstrom nicht zuläßt, ist einerseits der Wirkungsgrad der Vorrichtung vergleichsweise gering bzw. das Raumvolumen der Vorrichtung im Vergleich zu den durchgesetzten zu entfeuchtenden Luftströmen relativ groß.

Das Dokument DE 44 14 061 A1 beschreibt ein Gerät für die Klimatisierung von Räumen, das nach dem Sorptionsverfahren arbeitet, bestehend aus mindestens zwei Behältern für die Aufnahme von Sorptionsmaterial, einer Wärmezuführungsvorrichtung sowie einer Wärmeabführungsvorrichtung in Form von Rohranordnungen, und mindestens einem Adiabatkühler, bei dem jeder Behälter in einen Arbeitskreis zur Luftkühlung und einen weiteren Arbeitskreis zur Generation des Sorptionsmittels schaltbar ist. Bei dem Gerät sind mit Sorptionsmaterial gefüllte Speicher in einem Block zur Entfeuchtung eines Luftstromes vor nachgeschalteten Adiabatkühlern fest fixiert eingebaut. Über in die Sorptionskulissen eingebaute Rohrleitungssysteme wird Wärme zur Regeneration zugeführt. Die Konstruktion ist aufwendig und in der Herstellung außerordentlich kostenintensiv. Ferner wird die eingebrachte Wärme zur Regeneration über Wärmeleitung mit den damit verbundenen Übergangsverlusten an das zu regenerierende Sorptionsmaterial gebracht. Zudem bauen die in großer Anzahl in die Sorptionskulissen eingesetzten wärmeübertragenden Elemente in der Sorptionsschicht zusätzliche Strömungsturbulenzen auf, die den Durchströmungswiderstand wesentlich erhöhen.

Der Erfindung liegt die Aufgabe zugrunde, unter Vermeidung von Nachteilen des Standes der Technik ein Verfahren zur Klimatisierung von Räumen der im Oberbegriff von Anspruch 1 genannten Art sowie eine Vorrichtung zur Durchführung des Verfahrens anzugeben, welche eine in der Zeiteinheit erwünscht hohe Entfeuchterleistung bei unkomplizierter Bauart erbringt und mit einfachen Mitteln eine abwechselnde und kontinuierliche Feuchtigkeitsaufnahme des Adsorptionsmediums sowie danach dessen Regeneration ermöglicht, und zwar ohne Änderung der jeweiligen Luftführung, um dadurch den erwünscht hohen jeweiligen Wirkungsgrad einerseits bei der Entfeuchtung von Raumluft und andererseits bei der Regeneration feuchtigkeitsgesättigten Adsorptionsmaterials sicherzustellen.

Die Lösung der Aufgabe gelingt bei dem eingangs genannten Verfahren mit der Erfindung dadurch, daß nach Maßgabe des erreichten Sättigungsgrades im von Luft durchströmten Adsorptionsmedium die dieses Medium enthaltende Box aus dem Strom der feuchten Luft in den Strom der regenerativen Warmluft verlagert und die regeneriertes, für Feuchtigkeit aufnahmefähiges Adsorptionsmedium enthaltende Box in den Strom der feuchten Luft verlagert wird, und umgekehrt.

Bei dem Verfahren nach der Erfindung hat es sich als besonders zweckmäßig erwiesen, die verfahrenstechnischen Vorteile des Rotationsadsorbers mit denen eines Festbettadsorbers zu kombinieren, um damit gegenüber dem Stand der Technik größere Vorteile zu erzielen.

In Ausgestaltung des Verfahrens wird ein Strom feuchter Luft unter Verwendung einer zwei separate halbseitige Boxen enthaltenden kreisförmigen Vorrichtung durch in zwei Quadranten der Vorrichtung enthaltenes Adsorptionsmedium der einen Box geführt, wobei Wärme aus dem Luftstrom nach außen abgeleitet wird, während wassergesättigtes Adsorptionsmedium der anderen Box von Warmluft durchströmt und regeneriert wird. Dabei werden die Boxen mit ihren Adsorptionsmedien jeweils durch Schwenken der kreisförmigen Vorrichtung um 180° zwischen den Luftstömen ausgestauscht.

Vorteilhaft wird die Führung der Luftströme durch die kreisförmige Vorrichtung unter Verwendung eines sie umgebenden Gehäuses, und bevorzugt die Ableitung von Wärme aus dem entfeuchteten Luftstrom unter Verwendung eines vom Luftstrom durchflossenen Wärmetauschers vorgenommen.

Hierbei kann von der Maßnahme Gebrauch gemacht sein, daß ein Positionswechsel der die Adsorptionsmedien enthaltenden Boxen innerhalb der Luftstöme einerseits zu entfeuchtender Luft, und andererseits regenerativer Warmluft nach Maßgabe einer meßbaren Druck-, Feuchte- oder Temperaturdifferenz der die Boxen durchströmenden Luft vorgenommen wird oder der Positionswechsel in definierten zeitlichen Intervallen erfolgt.

Gemäß einer alternativen Ausgestaltung des Verfahrens wird ein feuchter Luftstrom durch einen Kanal mit einer darin befindlichen, Adsorptionsmedium enthaltenden ersten Box hindurchgeleitet und ein Strom erwärmter regenerativer Luft durch einen anderen Kanal mit einer darin befindlichen, zu regenerierendes Adsorptionsmedium enthaltenden zweiten Box hindurchgeführt. Nach Maßgabe der Sättigung des von der Luft durchströmten Adsorptionsmediums werden die Boxen in ihren Positionen innerhalb der Kanäle gegeneinander ausgetauscht.

Eine Vorrichtung zur Durchführung des zuvor bezeichneten Verfahrens ist gekennzeichnet durch eine mit einer Zwischenwand in zwei Kammern unterteilte kreisförmige, um eine Achse mit jeweils 180° verschwenkbare Anordnung innerhalb eines strömungsführenden Gehäuses, umfassend je zwei Kreisquadranten bildende gekrümmte Gitterrahmen unterschiedlichen Durchmessers mit dazwischen eingelagerten Adsorptionsmmedien, sowie Mittel zum Schwenken der Anordnung um je 180°, und am Gehäuse ausgebildete Lufteinström- und Luftausströmöffnungen.

Mit Vorteil sind beide Kammern voneinander derart getrennt, daß jeder der Luftströme nur über die Adsorptionsmedien einer Kammer und den zwischen den Adsorptionsmedien ausgebildeten halbkreisförmigen Raum strömen kann.

Eine Vorrichtung zur Durchführung des alternativen Verfahrens umfaßt in einem Gehäuse zwei aneinanderliegende Strömungskanäle mit in jedem Kanal in Strömungsrichtung zueinander versetzten Boxen mit Adsorptionsmedium. Bevorzugt an jeder Abströmseite sind im Kanal Strömungsgebläse zur Erzeugung zweier Luftströme, einerseits der Luft und andererseits des Regenerations-Warmluftstromesvorgesehen. Die Boxen sind in Führungen mit Antriebs- und Getriebemitteln nach Art einer wechselseitigen Austauschvorrichtung zum gegengleichen Positionswechsel zwischen den beiden Strömungskanälen ausgebildet.

Eine Ausgestaltung der Vorrichtung sieht vor, daß der Einströmöffnung des Regenerations-Warmluftstromes ein Heizregister bzw. Wärmetauscher vorgeschaltet ist.

Weiter sieht eine Ausgestaltung der alternativen Vorrichtung vor, daß die Positionswechselvorrichtung der Boxen mit einem Motor über Zahnräder antreibbare Hubspindeln im Eingriff mit an den Boxen befestigten Muttern aufweist, durch welche die Boxen abwechselnd in eine Position im Luftstrom oder im Regenerations-Warmluftstrom bringbar sind.

Weitere Einzelheiten, Merkmale und Vorteile der Erfindung ergeben sich aus der nachstehenden Erläuterung eines in den Zeichnungen schematisch dargestellten Ausführungsbeispieles. Es zeigen:
- Figur 1: eine Vorrichtung zur Entfeuchtung von Luft mit einem in zwei Kammern unterteilten kreisförmig gekrümmten Gitterrahmen unterschiedlichen Durchmessers mit eingelagertem Adsorptionsmedium, in perspektivischer Ansicht;
- Figur 2: eine Seitenansicht einer alternativen Vorrichtung mit zwei parallel abstandslos aneinanderliegenden Strömungskanälen und darin angeordneten Boxen mit Adsorptionsmedium sowie mit einer Austauschvorrichtung zum gegengleichen Positionswechsel der Boxen zwischen den Strömungskanälen;
- Figur 2a: die Vorrichtung gemäß Fig. 2 in Draufsicht;
- Figur 3: eine Teilansicht der Austauschvorrichtung nach Fig. 2 zum Positionswechsel der Boxen zwischen zwei Strömungskanälen.

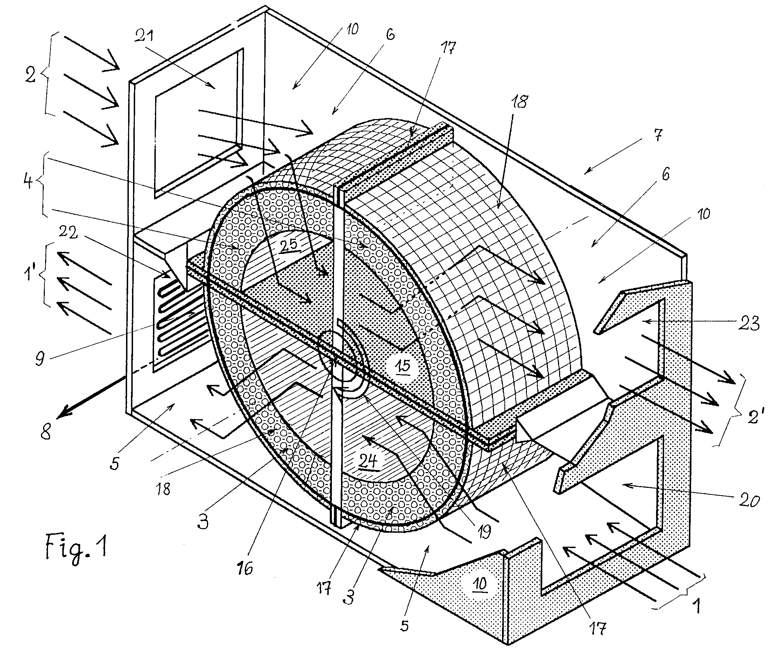

Die in Fig. 1 gezeigte Adsorptionsvorrichtung bspw. zur Klimatisierung von Räumen durch Adsorption von Feuchtigkeit aus der Raumluft 1 unter Abführung freiwerdender Wärme 8 an einen Wärmetauscher 9 weist innerhalb des strömungsführenden Gehäuses 10 eine mit einer Zwischenwand 15 in zwei Kammern 24, 25 unterteilte kreisförmige, um eine Achse 16 mit jeweils 180° verschwenkbare Anordnung 7 auf, umfassend je zwei Kreisquadranten bildende gekrümmte Gitterrahmen 17, 18 unterschiedlichen Durchmessers mit dazwischen eingelagerten Adsorptionsmedien 3, 4 sowie Mittel 19 zum Schwenken der Anordnung 7 um je 180° in einer Drehrichtung bzw. vor und zurück, und am Gehäuse 10 ausgebildete Lufteinström- 20, 21 und Luftausströmöffnungen 22, 23. Jede Kammer 24, 25 bildet zusammen mit dem entsprechenden Teil des Gehäuses 10 eine Box 5 bzw. 6 mit einer zwischen den gekrümmten Gitterrahmen 17, 18 befindlichen losen Schüttung von eingelagertem Adsorptionsmedium 3, 4. Der Anordnung 7 sind Mittel 19 zum Schwenken derselben um je 180° in die jeweilige Drehrichtung bzw. vor und zurück zugeordnet, die jedoch nicht näher dargestellt sind.

Zur Abführung von Wärme aus dem entfeuchteten Luftstrom 1, 1' ist bevorzugt in der Ausströmöffnung 22 ein Wärmetauscher 9 angeordnet.

Bevorzugt kann ein derartiger Wärmetauscher mit einer engmaschigen Wabenstruktur ausgebildet sein, wodurch ein hoher Wirkungsgrad beim Wärmeaustausch erzielt wird. Das dabei während der Kühlung durch Austausch von Wärme erwärmte Wärmeträgermedium, vorzugsweise Wasser, kann im geschlossenen Kreislauf in einem der Einströmöffnung 21 vorgeschalteten Heizregister oder Wärmetauscher (nicht gezeigt) zur Erwärmung des Regenerations-Wärmeluftstromes 2 genutzt werden. Der durch die Einströmöffnung 20 in die Vorrichtung eingeleitete Strom der Raumluft durchströmt im ersten Kreisquadranten der Anordnung 7 den Gitterrahmen 17 mit der Füllung von Adsorptionsmedium 3, tritt dann in den halbkreisförmigen Innenraum der Anordnung 7 ein und durchdringt ein zweites Mal beim Austreten aus diesem Raum die Adsorptionsschicht 3 der Box 5 und entströmt sodann nach Trocknung der Luft den in der Ausströmöffnung 22 angeordneten Kühler 9.

Wenn die Sorptionsaufnahmekapazität in den Schichten des Adsorptionsmediums 3 erschöpft ist - dies kann bspw. durch eine Druck-, Feuchte- oder Temperaturdifferenz festgestellt werden - wird die kreisförmige Anordnung 7 über die Achse 16 um 180° gedreht und das darin enthaltene Adsorptionsmedium zur Regeneration der Kammer 25 oberhalb der Zwischenwand 15 zugeführt. Die angewärmte Regenerierluft 2, welche durch die Einströmöffnung 21 in die Vorrichtung, und zwar in die Box 6, eintritt, wird gezwungen, durch die Sorptionsschicht 4 zu strömen und das vorher adsorbierte Wasser nach zweimaligem Durchdringen dieser Schicht als feuchtigkeitsgesättigte Abluft 2' durch die Ausströmöffnung 23 nach außen zu strömen.

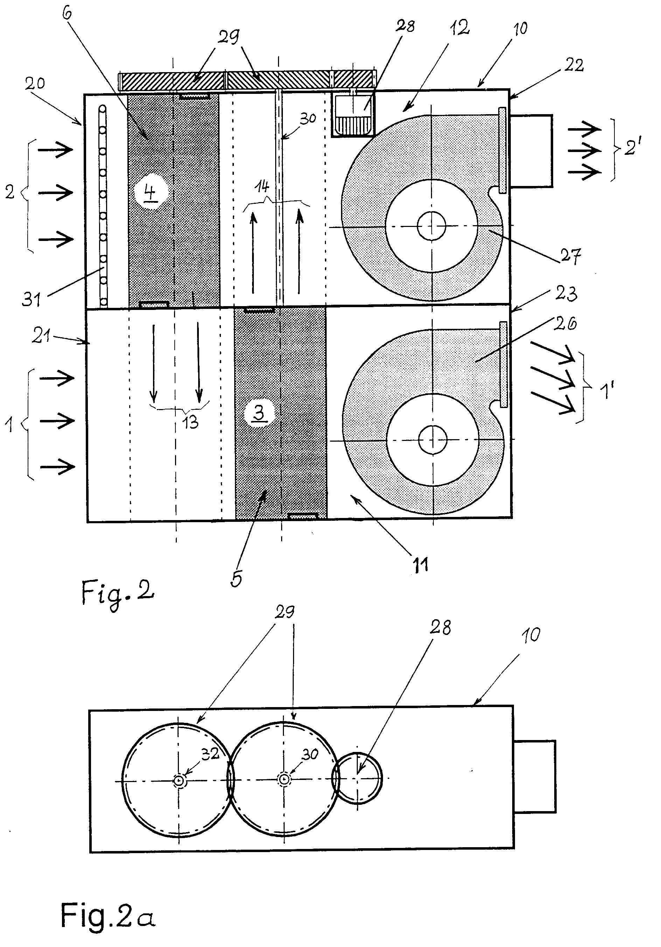

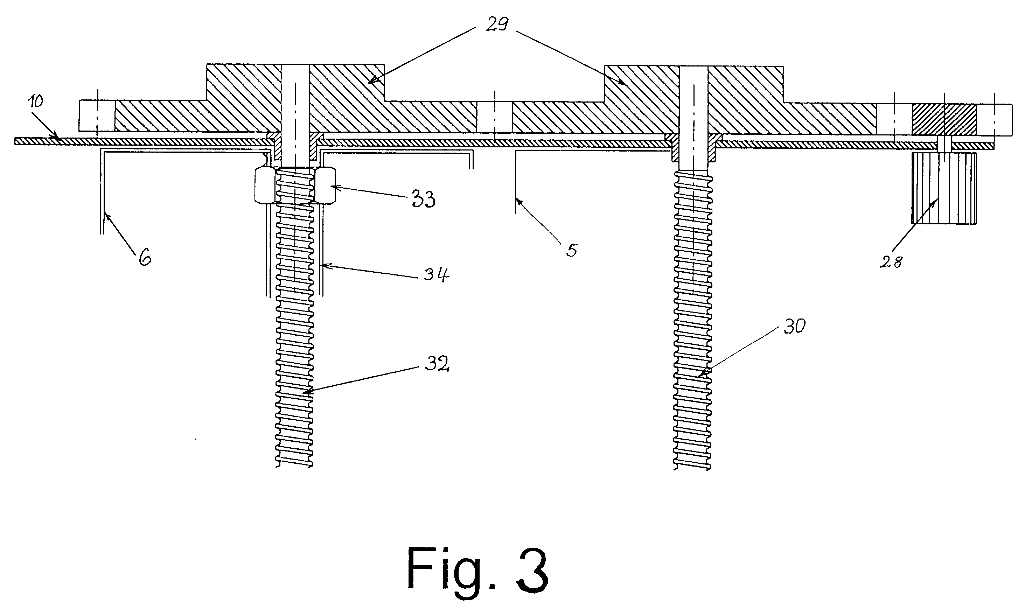

Die in den Fig. 2, 2a und 3 gezeigte Vorrichtung zur Durchführung des alternativen Verfahrens zur Entfeuchtung von Luft umfaßt in einem Gehäuse 10 zwei parallel abstandslos aneinanderliegende Strömungskanäle 11, 12, mit in jedem Kanal in Strömungsrichtung versetzten Boxen 5, 6 mit je einer Füllung von Adsorptionsmedium 3, 4, sowie bevorzugt an der Abströmseite 1', 2' vorgesehene endständig im Kanal 11, 12 angeordnete Strömungsgebläse 26, 27 zur Erzeugung zweier Luftströme 1, 2, und zwar einerseits der Raumluft 1 und andererseits des Regenerations-Warmluftstromes 2.

Die erfindungsgemäße Vorrichtung zur Entfeuchtung von gasförmigen Medien, insbesondere von Luft, mit seiner Wechselvorrichtung (Pfeilrichtung 13, 14) für die mit Adsorptionsmedium 3, 4 gefüllten Boxen 5, 6 zeichnet sich durch einen äußerst einfachen Aufbau bei hohem Wirkungsgrad der durch sie erreichten Raumklimatisierung aus. Dadurch, daß die mit Adsorptionsmedien gefüllten Boxen 5, 6 in die jeweilige Position Entfeuchtung oder Regenerierung mit Hilfe der insbesondere aus der Fig. 3 ersichtliche Wechselvorrichtung mit Hubspindelgetriebe 28 bis 34 gebracht werden, wird eine komplizierte und raumvolumenaufwendige Umlenkung der Gasströme, wie sie beim Stand der Technik üblich ist, vermieden. Auf diese Weise wird nicht nur die Bauart der Vorrichtung vereinfacht, sondern es entfallen Verluste und Widerstände bei der Strömungsumleitung. Ein besonders günstiger Wirkungsgrad wird auch dadurch erzielt, daß das Sorptionsbett eine kompakte und doch lockere, gut durchströmbare Schüttung der Adsorptionsmedien darstellt, ohne quer zur Strömungsrichtung hinderliche Einbauten. Baulich ist es weiterhin von Vorteil, daß die Wärmezufuhr mit dem Heizregister 31 durch den Regenerationsgasstrom 2 an das zu regenerierende Material mit maximalem Wirkungsgrad herangeführt wird.

Durch die bauliche Zuordnung des Zahnradgetriebes 29 mit Motor 30 gemäß Fig. 3 zu den Hubspindeln 30, 32 ist eine genaue Führung der Boxen 5, 6 ermöglicht und die erforderliche Dichtung zwischen den beiden Strömungskanälen 11, 12 gegeben. Außerdem werden die Hubspindeln 30, 32 von einem Rohr 34 gasdicht umgeben, welches an die Hubspindelmuttern 33 anschließt. Die bauliche Einbeziehung der Gebläse 26, 27 in die Strömungskanäle 11, 12 des Gehäuses 10 ermöglicht eine kompakte und kostengünstige Fertigung der Vorrichtung.

Die beiden vorbeschriebenen alternativen Verfahren und die zu ihrer Durchführung vorgesehenen Vorrichtungen sind unkompliziert, zweckmäßig und kompakt in ihrer Bauart und ermöglichen eine Raumklimatisierung mit hoher Leistung mit einem maximalen Wirkungsgrad. Sie sind selbstverständlich auch geeignet zur Entfeuchtung anderer gasförmiger Medien.

### Bezugszeichenliste

- 1: Raumluft (Strom)
- 2: Regenerations-Warmluft
- 3: Adsorptions-Medium
- 4: Adsorptions-Medium
- 5: Box
- 6: Box
- 7: kreisförmige Anordnung
- 8: Wärmeabfuhr
- 9: Wärmetauscher
- 10: Gehäuse
- 11: Kanal
- 12: Kanal
- 13: Pfeil für Positionswechselrichtung
- 14: Pfeil für Positionswechselrichtung
- 15: Zwischenwand
- 16: Achse
- 17: Gitterrahmen
- 18: Gitterrahmen
- 19: Schwenkmittel
- 20: Lufteinströmöffnung
- 21: Lufteinströmöffnung
- 22: Luftausströmöffnung
- 23: Luftausströmöffnung
- 24: Kammer
- 25: Kammer
- 26: Gebläse
- 27: Gebläse
- 28: Motor
- 29: Getriebe
- 30: Hubspindel
- 31: Heizregister
- 32: Hubspindel
- 33: Mutter
- 34: Rohr

## Patentansprüche

1. Verfahren zur Entfeuchtung von gasförmigen Medien, insbesondere zur Klimatisierung von Räumen, durch Adsorption von Feuchtigkeit aus der Luft (1) an ein mit der Luft (1) durchströmbares Adsorptionsmedium (3) unter Abführung frei werdender Wärme, sowie durch Regeneration wassergesättigten Adsorptionsmediums (4) in einem Strom angewärmter Luft (2), wobei die Adsorptionsmedien (3, 4) jeweils in luft- oder gasdurchströmbaren Boxen (5, 6) enthalten sind,
**dadurch gekennzeichnet,**
daß nach Maßgabe des erreichten Sättigungsgrades im von Luft (1) durchströmten Adsorptionsmedium (3) die dieses Medium enthaltende Box (5) aus dem Strom der feuchten Luft (1) in den Strom der regenerativen Warmluft (2) verlagert und die regeneriertes, für Feuchtigkeit aufnahmefähiges Adsorptionsmedium (4) enthaltende Box (6) in den Strom der feuchten Luft (1) verlagert wird, und umgekehrt.

2. Verfahren nach Anspruch 1,
**dadurch gekennzeichnet,**
daß ein Strom feuchter Luft (1) unter Verwendung einer zwei separate halbseitige Boxen (5) enthaltenden kreisförmigen Vorrichtung (7) durch in zwei Quadranten der Vorrichtung enthaltenes Adsorptionsmedium (3) der einen Box (5) geführt und dabei Wärme (8) aus dem Luftstrom (1) nach außen abgeleitet wird, während wassergesättigtes Adsorptionsmedium (4) der anderen Box (6) von Warmluft (2) durchströmt und regeneriert wird,
wobei die Boxen (5, 6) mit ihren Adsorptionsmedien (3, 4) jeweils durch Schwenken der kreisförmigen Vorrichtung (7) um 180° zwischen den Luftströmen (1, 1'; 2, 2') ausgetauscht werden.

3. Verfahren nach Anspruch 1 oder 2,
**dadurch gekennzeichnet,**
daß die Führung der Luftströme (1, 2) durch die kreisförmige Vorrichtung (7) unter Verwendung eines sie umgebenden Gehäuses (10) vorgenommen wird.

4. Verfahren nach Anspruch 1,
**dadurch gekennzeichnet,**
daß die Ableitung von Wärme (8) aus dem entfeuchteten Luftstrom (10) unter Verwendung eines vom Luftstrom (1') durchflossenen Wärmetauschers (9) vorgenommen wird.

5. Verfahren nach einem oder mehreren der Ansprüche 1 bis 4,
**dadurch gekennzeichnet,**
daß ein Positionswechsel der die Adsorptionsmedien (3, 4) enthaltenden Boxen (5, 6) innerhalb der Luftströme (1, 2) einerseits zu entfeuchtender Luft, und andererseits regenerativer Warmluft nach Maßgabe einer meßbaren Druck-, Feuchte- oder Temperaturdifferenz der die Boxen (5, 6) durchströmenden Luft vorgenommen wird, oder der Positionswechsel in definierten, vorgegebenen Zeitintervallen erfolgt.

6. Verfahren nach Anspruch 1,
**dadurch gekennzeichnet,**
daß ein feuchter Luftstrom (1) durch einen Kanal (11) mit einer darin befindlichen, Adsorptionsmedium (3) enthaltenden ersten Box (5) hindurchgeleitet und ein Strom erwärmter regenerativer Luft (2) durch einen anderen Kanal (12) mit einer darin befindlichen, zu regenerierendes Adsorptionsmedium (4) enthaltenden zweiten Box (6) hindurchgeführt wird,
wobei nach Maßgabe der Sättigung des von Luft (1) durchströmten Adsorptionsmediums (3) die Boxen (5, 6) in ihren Positionen innerhalb der Kanäle (11, 12) gegeneinander (Pfeile 13, 14) ausgetauscht werden.

7. Verfahren nach einem der Ansprüche 1 bis 6,
**dadurch gekennzeichnet,**
daß der Positionswechsel der regenerierte Adsorptionsmedien enthaltenen Box (5, 6) in die Position zur Feuchteaufnahme zu dem Zeitpunkt vorgenommen, wenn die Temperatur der Regenerationswarmluft am Ausgang der Box dem vorgegebenen Eingangswert gleicht und/oder der Feuchtegehalt am Ausgang der zu regenerierenden Box den vorgegebenen eingestellten Wert erreicht.

8. Vorrichtung zur Durchführung des Verfahrens nach mindestens einem der Ansprüche 1 bis 7,
**gekennzeichnet durch**
eine mit einer Zwischenwand (15) in zwei Kammern (24, 25) unterteilte kreisförmige, um eine Achse (16) mit jeweils 180° verschwenkbare Anordnung (7) innerhalb eines strömungsführenden Gehäuses (10), umfassend je zwei Kreisquadranten bildende gekrümmte Gitterrahmen (17, 18) unterschiedlichen Durchmessers mit dazwischen eingelagerten Adsorptionsmedien (3, 4) sowie Mittel (19) zum Schwenken der Anordnung (7) um je 180°, und am Gehäuse (10) ausgebildete Einström- (20, 21) und Ausströmöffnungen (22, 23) für gasförmige Medien, insbesondere Luft.

9. Vorrichtung nach Anspruch 8,
**dadurch gekennzeichnet,**
daß beide Kammern (24, 25) voneinander derart getrennt sind, daß jeder der Luftströme (1, 2) nur über das Adsorptionsmedium (3 bzw. 4) einer Kammer (24 bzw. 25) und den zwischen den Adsorptionsmedien (3, 4) ausgebildeten halbkreisförmigen Raum strömen kann.

10. Vorrichtung zur Durchführung des Verfahrens nach Anspruch 6,
**gekennzeichnet durch**
wenigstens zwei in einem Gehäuse (10) aneinanderliegende Strömungskanäle (11, 12) mit in jedem Kanal in Strömungsrichtung zueinander versetzten Boxen (5, 6) mit Adsorptionsmedium (3, 4), sowie bevorzugt an jeder Abströmseite (1', 2') vorgesehenen dem Kanal (11, 12) zugeordneten Strömungsgebläsen (26, 27) einerseits für die Luft (1), und andererseits für den Regenerations-Warmluftstrom (2),
wobei die Boxen (5, 6) in Führungen mit Antriebs- und Getriebemitteln (28-30) nach Art einer wechselseitigen Austauschvorrichtung zum gegengleichen Positionswechsel (13, 14) zwischen den beiden Strömungskanälen (11, 12) ausgebildet sind.

11. Vorrichtung nach Anspruch 10,
**dadurch gekennzeichnet,**
daß der Einströmöffnung (20) des Regenerations-Warmluftstromes ein Heizregister bzw. Wärmetauscher (31) vorgeschaltet ist.

12. Vorrichtung nach Anspruch 10 oder 11,
**dadurch gekennzeichnet,**
daß die Positionswechselvorrichtung (13, 14) der Boxen (5, 6) mit einem Motor (28) über Zahnräder (29) antreibbare Hubspindeln (30, 32) im Eingriff mit an den Boxen befestigten Muttern (33) aufweist, durch welche die Boxen (5, 6) abwechselnd in eine Position im Luftstrom (1) oder im Regenerations-Warmluftstrom (2) bringbar sind.
